(19) Europäisches Patentamt
European Patent Office
Office européen des brevets

(11) **EP 3 960 271 A1**

(12) **EUROPEAN PATENT APPLICATION**
published in accordance with Art. 153(4) EPC

(43) Date of publication:
**02.03.2022 Bulletin 2022/09**

(21) Application number: **20796251.5**

(22) Date of filing: **16.03.2020**

(51) International Patent Classification (IPC):
*B01D 39/14* (2006.01)      *B01D 46/00* (2022.01)
*B01J 35/04* (2006.01)      *B01D 53/86* (2006.01)
*B01D 53/94* (2006.01)      *F01N 3/022* (2006.01)
*F01N 3/035* (2006.01)      *F01N 3/28* (2006.01)

(52) Cooperative Patent Classification (CPC):
**B01D 39/14; B01D 46/00; B01D 53/86;
B01D 53/94; B01J 35/04; F01N 3/022; F01N 3/035;
F01N 3/28**

(86) International application number:
**PCT/JP2020/011407**

(87) International publication number:
**WO 2020/217774 (29.10.2020 Gazette 2020/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.04.2019  JP 2019086487**

(71) Applicant: **Denso Corporation
Aichi 448-8661 (JP)**

(72) Inventors:
• **KOIKE Kazuhiko
  Nisshin-city, Aichi 4700111 (JP)**
• **MIZUTANI Keisuke
  Nisshin-city, Aichi 4700111 (JP)**
• **ASAOKU Kana
  Aichi 4488661 (JP)**

(74) Representative: **Kuhnen & Wacker
Patent- und Rechtsanwaltsbüro PartG mbB
Prinz-Ludwig-Straße 40A
85354 Freising (DE)**

(54) **EXHAUST GAS PURIFICATION FILTER**

(57)     An exhaust gas purification filter comprises a base material part, a catalyst layer (17), and sealing parts. The base material part comprises porous partition walls (12). The catalyst layer (17) is supported on pore walls (124) of the partition walls (12). The partition walls (12) supporting the catalyst layer (17) comprise 10% or less of pores (121) having a pore diameter of 50 μm or more. In the pore diameter distribution in the partition walls (12) supporting the catalyst layer (17), the pore diameter D50 at which the cumulative pore volume becomes 50% is 10 μm or more. The pore diameter D50, and the pore diameter D10 at which the cumulative pore volume becomes 10%, satisfy the relationship of the following Expression 1.

$$(D50 - D10) / D50 \leq 0.9 \ ... \text{ Expression 1}$$

FIG.3

**Description**

[Cross-Reference to Related Application]

This application is based on, and incorporates herein by reference, Japanese application No. 2019-086487 filed on April 26, 2019.

[Technical field]

The present disclosure relates to an exhaust gas purification filter comprising a base material part, and sealing parts, the base material part having a honeycomb configuration.

[Background Art]

Exhaust gas discharged from internal combustion engines such as diesel engines and gasoline engines, and heat engines such as boilers, contains particulate matter, so called particulate. The particulate is abbreviated to "PM" in the following. An exhaust gas purification filter is used to collect the PM in exhaust gas.
An exhaust gas purification filter generally comprises a honeycomb-structure base material part having a plurality of cells that are formed by being partitioned by porous partition walls, and sealing parts that alternately seal ends of the cells of the filter. PM contained in the exhaust gas is collected in the pores of the partition walls. There is a requirement to reduce the degree of loss of pressure of the exhaust gas purification filter while increasing the PM collection rate. The PM collection rate is hereinafter referred to as the "collection rate" as appropriate, and the loss of pressure is hereinafter referred to pressure loss as appropriate. Increasing the porosity of the partition walls is effective for reducing the pressure loss, however if the porosity is increased, the collection rate tends to decrease.
In recent years, there has been a demand for exhaust gas purification filters to have a purification capability against harmful substances such as HC, CO, and NOx. For example, in PTL 1, a technology is disclosed in which a coat layer containing a catalyst is formed in a condition in which pores having a diameter of 10 $\mu$m or less of an exhaust gas purification filter have been closed beforehand, whereby the coat layer is formed such as to be biased to pores having a pore diameter exceeding 10 $\mu$m.

[Citation List]

[Patent Literature]

PTL 1: JP 3855267 B

[Summary of the Invention]

With the technique of PTL 1, there is an increase in the number of pores on which the catalyst is not supported. As a result, the purification rate for harmful gas components tends to deteriorate. In recent years, there have been increasing demands for a collection rate, pressure loss, and purification rate of harmful gas components, and further improvement is required.
The present disclosure is intended to provide an exhaust gas purification filter having a high collection rate, low pressure loss, and excellent purification performance against harmful gas components.
One aspect of the present disclosure relates to an exhaust gas purification filter comprising:

a base material part having a honeycomb-structure, the base material part comprising porous partition walls and a plurality of cells which are partitioned by the partition walls and form an exhaust gas flow path,
a catalyst layer supported on pore walls in the partition walls of the base material part, and
sealing parts which seal the ends of the cells alternately at an exhaust gas inflow end face or at an outflow end face:
wherein:

the partition walls supporting the catalyst layer contain 10% or less of pores having a pore diameter of 50 $\mu$m or more, and
in the pore distribution in the partition walls supporting the catalyst layer, the pore diameter D50 at which the cumulative pore volume becomes 50% is 10 $\mu$m or more, and the pore diameter D50 and the pore diameter D10 at which the cumulative pore volume becomes 10% satisfy the relationship of Expression I below.

$$(D50 - D10) / D50 \leq 0.9 \ldots \text{Expression I}$$

The above-mentioned exhaust gas purification filter comprises the base material part, the catalyst layer and the sealing parts. The catalyst layer is supported on the pore walls in the partition walls of the base material part. With the partition walls in a condition of supporting the catalyst layer, the proportion of pores having a pore diameter of 50 μm or more is equal to or less than the above-described prescribed amount, while having a pore diameter distribution in which the pore diameters D50 and D10 satisfy the above-described prescribed relationship. An exhaust gas purification filter having such a configuration has low pressure loss, high collection rate, and excellent purification performance against harmful gases even when a sufficient amount of catalyst is supported.

As described above, an exhaust gas purification filter according to the above aspect can provide a high collection rate, a low degree of pressure loss, and excellent purification performance against harmful gas components.

It should be noted that the reference signs in parentheses set out in the claims indicate correspondences with specific means described in the embodiments, and do not limit the technical scope of the present disclosure.

[Brief Description of the Drawings]

The above objectives, and other objectives, features and advantages of the present disclosure will be made clearer by the following detailed description, given referring to the appended drawings. In the drawings:

Fig. 1 is a perspective view of an exhaust gas purification filter according to a first embodiment.
Fig. 2 is an enlarged partial cross-sectional view of the exhaust gas purification filter according to the first embodiment in the axial direction.
Fig. 3 is an enlarged cross-sectional schematic view of a partition wall of the exhaust gas purification filter according to the first embodiment.
Fig. 4 is an enlarged cross-sectional schematic view of a partition wall of the exhaust gas purification filter according to the first embodiment, showing a simplified pore shape.
Fig. 5 is an enlarged cross-sectional schematic view of a partition wall of a base material part of the exhaust gas purification filter according to the first embodiment, showing a simplified pore shape.
Fig. 6 is an enlarged cross-sectional schematic view of a partition wall of the base material part of an exhaust gas purification filter, showing a simplified pore shape, in the first comparative embodiment.
Fig. 7 is an enlarged cross-sectional schematic view of a partition wall of an exhaust gas purification filter, showing a simplified pore shape, in the second comparative embodiment.
Fig. 8A is a diagram showing measurement sample collection positions in the radial direction of the exhaust gas purification filter of an Experimental Example 1 (specifically, a cross section taken along the line VIIIa-VIIIa of Fig. 8B). Fig. 8B is a diagram showing the sample collection positions of the measurement samples in the axial direction and the radial direction of the exhaust gas purification filter of Experimental Example 1.
Fig. 9 is a diagram showing an example of the pore diameter distribution of the exhaust gas purification filter of Experimental Example 1.
Fig. 10 is a diagram showing the relationship between the pore volume ratio of pores having a pore diameter of 50 μm or more and the collection rate, in Experimental Example 1.
Fig. 11 is a diagram showing the relationship between the pore volume ratio of pores having a pore diameter of 50 μm or more and the pressure loss, in Experimental Example 1.
Fig. 12 is a diagram showing the relationship between (D50 - D10) / D50 of the pore diameter distribution and the pressure loss, in Experimental Example 1.

[Description of the Embodiments]

<First Embodiment>

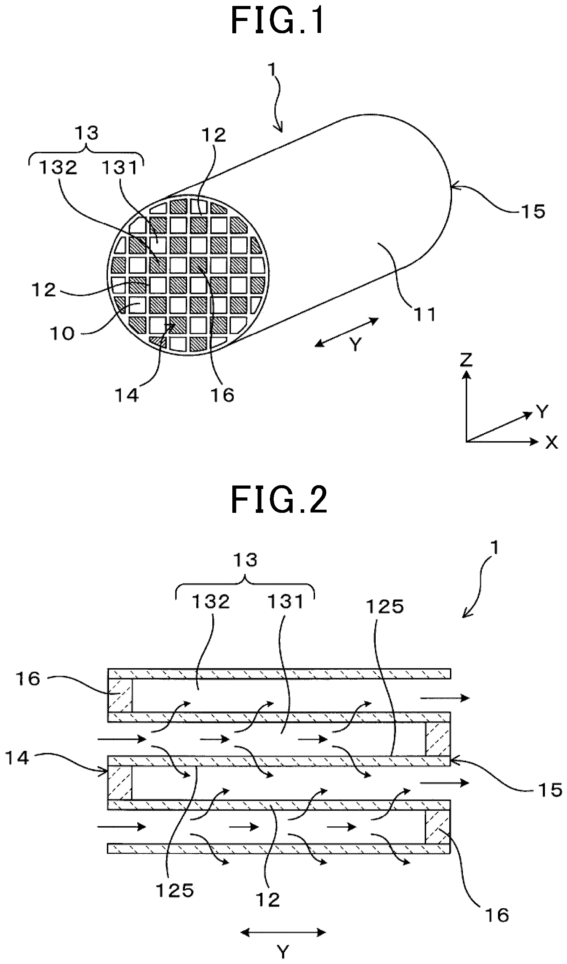

An embodiment of an exhaust gas purification filter will be described with reference to Figs. 1 to 6. As illustrated in Figs. 1 to 3, the exhaust gas purification filter 1 comprises a base material part 10, a catalyst layer 17, and sealing parts 16. The base material part 10 is formed of a ceramic such as cordierite, and comprises for example an outer skin 11, partition walls 12, and cells 13. The base material part 10 is a portion other than the catalyst layer 17 and the sealing parts 16, and is substantially the same as a base material having a honeycomb structure prior to forming the catalyst layer 17 and the sealing parts 16.

The outer skin 11 is, for example, a cylindrical body. In describing the present embodiment, the axial direction Y of the cylindrical outer skin 11 will be referred to in the following as the axial direction Y of the exhaust gas purification filter 1. The arrow in Fig. 2 indicates the flow of exhaust gas when the exhaust gas purification filter 1 is disposed in the path of exhaust gas, such as in an exhaust pipe.

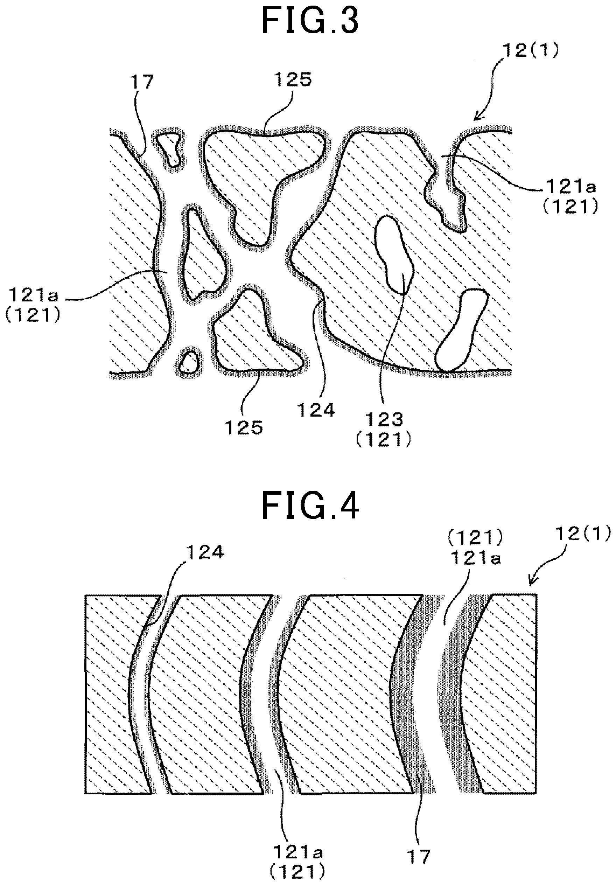

As illustrated in Figs. 1 and 2, the partition walls 12 divide the interior of the outer skin 11 into a large number of cells 13. The partition walls 12 are also generally referred to as cell walls. The partition walls 12 are arranged, for example, in a grid pattern. The exhaust gas purification filter 1 is a porous body, and a large number of pores 121 are formed in the partition walls 12 as illustrated in Fig. 3. The exhaust gas purification filter 1 can thereby collect PM contained in the exhaust gas by accumulating the PM on the surfaces of the partition walls 12 and the pores 121. The Pore 121 is also called air pore. PM is fine particles, called particulate matter, particulates, etc.

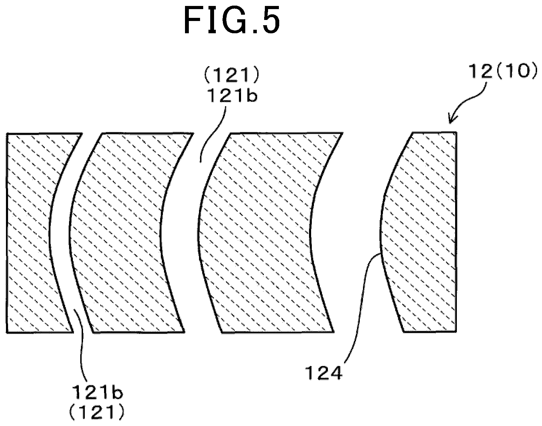

As the pores 121 of the present description, as illustrated in Figs. 4 and 5, there are pores 121a of the filter in the condition in which the catalyst is supported and pores 121b of the base material part itself, the pores of the filter are referred to as the "filter pores 121a" while the pores of the base material part itself are referred to as the "base material pores 121b", as appropriate. That is, the term "base material pores 121b" has substantially the same significance as "the pores in the condition in which the catalyst is not supported".

As illustrated in Figs. 1 and 2, the exhaust gas purification filter 1 has a large number of cells 13. The cells 13are surrounded by the partition walls 12 and form an exhaust gas flow path. The extension direction of the cells 13 usually coincides with the axial direction Y.

As illustrated in Fig. 1, the cell shape, as seen in a cross section of the filter orthogonal to the axial direction Y is, for example a quadrangular shape, however it is not limited to this. The cell shape may be a polygon such as a triangle, a quadrangle, or a hexagon, or may be circular. Furthermore, the cell shape may be a combination of two or more different shapes.

The exhaust gas purification filter 1 is, a columnar body for example in a cylindrical form, and its dimensions can be changed as appropriate. The exhaust gas purification filter 1 has an inflow end face 14 and an outflow end face 15 at respective sides, with respect to the axial direction Y. The inflow end face 14 is the end face on the side at which the exhaust gas flows in, and the outflow end face 15 is the end face on the side from which the exhaust gas flows out. In a state where the exhaust gas purification filter 1 is not disposed in a flow of exhaust gas such as in an exhaust pipe, the terms "inflow end face 14" and "outflow end face 15" have significance relative to each other. In other words, when one of the end faces is the inflow end face 14, the other is the outflow end face 15. For example, the inflow end face 14 can be referred to as the axial first end face, and the outflow end face 15 can be referred to as the axial second end face.

The cells 13 can comprise first cells 131 and second cells 132. As illustrated in Fig. 2, the first cells 131 are open at the inflow end face 14 and closed by sealing parts 16 at the outflow end face 15. The second cells 132 are open at the outflow end face 15 and closed by sealing parts 16 at the inflow end face 14.

The sealing parts 16 close the cells 13, for example alternately at the inflow end face 14 or the outflow end face 15 of the filter. The sealing parts 16 can be formed of a ceramic such as cordierite, but may be made of other materials. In Fig. 2, plug-shaped sealing parts 16 are formed, however the shape of the sealing parts 16 is not particularly limited so long as cells can be sealed at the inflow end face 14 or the outflow end face 15. Although the configuration is not shown, it is also possible to form the sealing parts 16 by deforming parts of the partition walls 12 on the inflow end face 14 or the outflow end face 15, for example. In that case, since the sealing parts 16 are formed by parts of the partition walls 12, the partition walls 12 and the sealing parts 16 are integrally and continuously formed.

The first cells 131 and the second cells 132 alternate in the horizontal direction X, orthogonal to the axial direction Y, and in the vertical direction Z, orthogonal to both the axial direction Y and the horizontal direction X, for example, such as to be formed adjacent to each other. That is, when the inflow end face 14 or the outflow end face 15 of the exhaust gas purification filter 1 is viewed from the axial direction Y, the first cells 131 and the second cells 132 are arranged in a checkered pattern.

As illustrated in Fig. 2, the partition walls 12 separate those of the first cells 131 and second cells 132 that are adjacent to each other. As illustrated in Fig. 3 a large number of pores 121 are formed in the partition walls 12. The pores 121 include pores that form communication holes, which communicate between first cells 131 and second cells 132 that are adjacent to each other, and non-communication holes that do not communicate between the cells. In Fig. 3 the pores 121 are shown in two dimensions to simplify the diagram, however it can be considered that most of the pores 121 intersect in three dimensions.

As illustrated in Figs. 3 and 4, the catalyst layer 17 is supported on at least the pore walls 124 of the partition walls 12. A pore wall 124 is a portion of a partition wall 12 that faces a pore 121. The catalyst layer 17 is preferably formed over all of a pore wall 124. However, the catalyst layer 17 may not be formed on the pore walls 124 of pores 121 that do not open into the cells 13. The catalyst layer 17 may also be formed on the flow path walls 125 of the partition walls 12. A flow path wall 125 is the parts of a partition wall 12 that face a cell 13. Although omitted from Fig. 2, the catalyst layer in the exhaust gas purification filter 1 is formed on the flow path walls 125 and the pore walls 124 of the partition walls 12 shown in that diagram.

The catalyst layer 17 contains a three-way catalyst made of noble metals such as Pt, Rh, Pd, etc. The catalyst layer 17 may further contain alumina, a co-catalyst, and the like. Examples of a co-catalyst include ceria, zirconia, and ceria-zirconia solid solution. The amount of the catalyst layer 17 that is supported is, for example, 30 to 150 g / L.

From the aspect of achieving a high degree of improvement in both the collection rate and in reduction of the pressure loss, the average pore diameter of the partition walls 12 in the base material part 10, in the state in which the catalyst layer 17 is not formed, is preferably 15 μm or more and 22 μm or less, more preferably 16 μm or more and 20 μm or less, even more preferably 16 μm or more and 18 μm or less. The average pore diameter in the partition walls 12 in the base material part 10 is the average pore diameter of the base material pores 121b.

From the aspect of improving the filter strength while reducing the pressure loss, the porosity of the partition walls 12 in the base material part 10, in the state in which the catalyst layer 17 is not formed, is preferably 60% or more and 70% or less, more preferably 62% or more and 68% or less, even more preferably 64% or more and 67% or less. The porosity of the partition walls 12 in the base material part 10 is the porosity of the base material pores 121b.

From the aspect of achieving a high degree of improvement in both the collection rate and in reduction of the pressure loss, the average pore diameter of the partition walls 12, in the state in which the catalyst layer 17 has been formed, is preferably 10 μm or more and 20 μm or less, more preferably 12 μm or more and 18 μm or less, even more preferably 14 μm or more and 17 μm or less. The average pore diameter of the partition walls 12 in the state in which the catalyst layer 17 has been formed is the average pore diameter of the filter pores 121a.

From the aspect of improving the filter strength while reducing the pressure loss, the porosity of the partition walls 12, in the state in which the catalyst layer 17 has been formed, is preferably, for example, 50% or more and 60% or less, more preferably 52% or more and 58% or less, even more preferably 54% or more and 56% or less. The porosity in the state in which the catalyst layer 17 has been formed is the porosity of the filter pores 121a. The average pore diameter and porosity are measured based on the principle of the mercury intrusion method, and details of the measurement method are shown in the experimental examples.

In the state in which the catalyst layer 17 has been formed, the partition walls 12 have a predetermined pore diameter distribution. That is, in the present embodiment, the filter pores 121a have a predetermined pore diameter distribution. Specifically, in the pore diameter distribution measured by the mercury intrusion method, the pore volume ratio of pores having a pore diameter of 50 μm or more is 10% or less, the pore diameter D50 at which the cumulative pore volume becomes 50% is 10 μm or more, while the pore diameter D50 (units: μm) and the pore diameter D10 (units: μm) at which the cumulative pore volume becomes 10% satisfy the relationship of Expression 1 below.

$$(D50 - D10) / D50 \leq 0.9 \text{ ... Expression 1}$$

In such an exhaust gas purification filter 1, the pore diameter distribution, in the state in which the catalyst layer 17 has been formed, is favorable from the aspects of a high collection rate, low degree of pressure loss, and high purification performance. Specifically, as illustrated in Fig. 4, the catalyst layer 17 is supported on the pore walls 124 of pores 121 having various different pore diameters, with large amounts of the catalyst layer 17 being formed in the pores 121 having a large pore diameter, but with a sufficient proportion of medium-size pore pores 121 in the pore diameter distribution. As a result, the number of pores 121 having a large pore diameter that allows PM to easily pass through is reduced, while furthermore, although a sufficient amount of the catalyst layer 17 is formed for purifying harmful gas components, blockage by the pores 121 having a small pore diameter is prevented. That is, the partition walls 12 of the exhaust gas purification filter 1 have a pore diameter distribution whereby there is large number of pores having small to medium-size pore diameters, but whereby blockage of the pores 121 is avoided. An increase in pressure loss is thereby prevented, while maintaining the collection rate and the purification capability against harmful components at a high level. As a result, the exhaust gas purification filter 1 has a high collection rate, a low degree of pressure loss, and an excellent performance in purification of harmful gas components.

The term "pore volume ratio" signifies the content ratio of the pores 121, and the volume ratio of coarse pores having a pore diameter of 50 μm or more is referred to as the "coarse pore volume ratio". Here, "coarse pore volume ratio" signifies the content ratio of the coarse pore volume to the total pore volume. In addition, the term "cumulative pore volume" signifies the cumulative frequency of the pore volume in the frequency histogram of the pore diameters. The pore volume ratio, the pore diameter D50 at which the cumulative pore volume becomes 50%, and the pore diameter D10 at which the cumulative pore volume becomes 10% are respective averages of measured values that are obtained, based on the principles of the mercury intrusion method, for a plurality of measurement samples. The measurement method will be illustrated by the experimental examples.

If the coarse pore volume ratio of the filter pores 121a in the partition walls 12 exceeds 10%, the PM collection efficiency decreases and the collection rate decreases. From the aspect of further improving the collection rate, the coarse pore volume ratio of the exhaust gas purification filter 1 is preferably 8% or less, and more preferably 7% or less.

If the pore diameter D50 of the filter pores 121a is less than 10 μm, or if (D50 - D10) / D50 > 0.9, there is an increase in the proportion of pores having a small diameter, and the degree of pressure loss increases. From the aspect of further decreasing the pressure loss, the pore diameter D50 is preferably 12 μm or more, and more preferably 14 μm

or more. From the same aspect, it is preferable to satisfy the relationship (D50 - D10) / D50 ≤ 0.7, and more preferably (D50 - D10) / D50 ≤ 0.6.

The partition walls 12 in which the catalyst layer 17 is formed preferably contain 5 to 15% of pores having a pore diameter in the range 0.1 $\mu$m to 5 $\mu$m. The pore volume ratio of fine pores having a pore diameter in the range 0.1 $\mu$m to 5 $\mu$m is referred to in the following as the "fine pore volume ratio", as appropriate. That is, it is preferable that the fine pore volume ratio of the filter pores 121a is in the range 5 to 15%. In that case there will be a sufficient number of fine pores having high PM collection efficiency, even in the state in which the catalyst layer 17 has been formed, so that the collection rate can be further improved while avoiding an increase in the degree of pressure loss. From the aspect of further improving the collection rate while further suppressing the pressure loss, the fine pore volume ratio of the exhaust gas purification filter 1 is more preferably in the range 6 to 14%, even more preferably in the range 7 to 14%. The lower limit of the pore diameter of the fine pores in the partition walls 12 is 0.1 $\mu$m. This limit is necessary for distinguishing the fine pores in the partition walls 12 from the pores in the catalyst layer 17, since these are ultrafine pores having a diameter of less than 0.1 $\mu$m.

It is preferable for the catalyst layer 17 to be mainly formed on the pore walls 124 of the coarse base material pores 121b, which have a pore diameter of 50 $\mu$m or more. Specifically, it is preferable that more of the catalyst layer 17 is supported on the pore walls 124 of the coarse pores having a pore diameter of 50 $\mu$m or more than on the pore walls 124 of pores having a pore diameter of less than 50 $\mu$m. In that case, both a higher collection rate and a lower degree of pressure loss can be achieved.

The base material part 10 preferably contains 3 to 15% of pores 121 having a pore diameter of 50 $\mu$m or more in the partition walls 12. In that case, since further sufficient amount of the catalyst layer 17 is formed on the coarse pores, the purification performance against harmful gas components can be further improved, and collection rate can be also further improved while reducing the degree of pressure loss. From the aspect of further enhancing these effects, the coarse pore volume ratio of the base material pores 121b is preferably 5 to 10%, more preferably 6 to 8%.

The pore volume $V_1$ of pores in the partition walls 12 of the base material part 10 which have a pore diameter of 50 $\mu$m or more, and the pore volume $V_2$ of pores in the partition walls 12 which have a pore diameter of 50 $\mu$m or more and in which the catalyst layer 17 is supported, preferably satisfy the relationship of the Expression 2 below. That is, it is preferable that the coarse pore volume $V_1$ of the base material pores 121b and the coarse pore volume $V_2$ of the filter pores 121a satisfy the relationship of Expression 2 below.

$$V_2 / V_1 \text{ x } 100 \leq 70\% \text{ ... Expression 2}$$

If the relationship of Expression 2 is satisfied, a further sufficient amount of the catalyst layer 17 is present in the coarse pores. Hence, the collection rate and the purification performance for harmful gas components can be further improved, while preventing an increase in the pressure loss. From the aspect of further enhancing this effect, $V_2 / V_1 \times 100 \leq 66\%$ is more preferable, and $V_2 / V_1 \times 100 \leq 60\%$ is even more preferable. Here, "harmful gas components" consist of HC, CO, NOx and the like.

The pore volume $V_3$ of pores in the partition walls 12 of the base material part 10 which have a pore diameter of 0.1 $\mu$m to 5 $\mu$m, and the pore volume $V_4$ of pores in the partition walls 12 which have a pore diameter of 0.1 $\mu$m to 5 $\mu$m and on which the catalyst layer 17 is supported, preferable satisfy the relationship expressed by Expression 3 below. That is, it is preferable that the fine pore volume $V_3$ of the base material pores 121b and the fine pore volume $V_4$ of the filter pores 121a satisfy the relationship of Expression 3.

$$V_4 / V_3 \text{ x } 100 \geq 200\% \text{ .... Expression 3}$$

By satisfying the relationship of Expression 3, the purification performance for harmful gas components can be further improved. From the aspect of further enhancing this effect, $V_4 / V_3 \times 100 \geq 280\%$ is preferable, and $V_4 / V_3 \times 100 \geq 300\%$ is more preferable. From the aspect of improving the purification performance while preventing an increase in pressure loss, it is preferable that $V_4 / V_3 \times 100 \leq 400\%$.

The pore volume ratio and the pore diameter distributions D50 and D10 of the filter pores 121a are measured by executing the mercury intrusion method on the partition walls 12 of the exhaust gas purification filter 1. The pore volume ratio and the pore volume of the base material pores 121b of this example were measured by applying the mercury intrusion method to the partition walls 12 of the base material part 10. Details of the measurement by the mercury intrusion method will be described with reference to the experimental examples. It is also possible to measure the pore volume ratio and pore volume of the base material pores 121b by means of a CT scan. The CT scan can be performed on the partition walls 12 with the catalyst layer 17 formed thereon. In that case, since there is a difference in shade between the ceramic part of the partition walls 12 and the catalyst layer 17, it is possible to distinguish the catalyst layer 17 and the ceramic part by applying binarization processing using a predetermined threshold value. The pore volume ratio and the pore volume of the base material pores 121b in the partition walls 12 can thereby be measured in the state in which the catalyst layer 17 has been formed. It is also possible to measure the pore volume ratio and pore volume of the filter pores 121a by means of a CT scan.

The exhaust gas purification filter 1 is manufactured as follows, for example. First, a clay containing raw material for forming cordierite is prepared. The clay is prepared by adjusting the proportions of talc, silica, aluminium hydroxide, etc., such as to constitute cordierite, further adding a binder, a lubricant and water, and mixing. It is also possible to blend alumina and kaolin to constitute cordierite.

Next, the clay is moulded, dried, and fired. The base material part 10, having a honeycomb structure, is thereby formed. The sealing parts 16 are formed before or after firing the base material part 10. That is, the sealing parts 16 are formed by sealing the cells 13 alternately at the end faces of the base material part 10 of the honeycomb structure, before or after firing using slurry for forming the sealing parts 16.

The catalyst layer 17 is formed on the base material part 10 before or after forming the sealing parts 16. The catalyst layer 17 is formed by coating the partition walls 12 with a catalyst slurry containing a noble metal, alumina, a co-catalyst, etc. The catalyst layer 17 can be coated on the pore walls 124 of the partition walls 12 by performing suction or the like. The coarse pore volume ratio D50 and the pore diameter distribution (D50 - D10) / D50 of the exhaust gas purification filter 1 can be adjusted to be within the above-described ranges by performing water pretreatment before coating the base material part 10 with the catalyst slurry, or by making the viscosity of the catalyst slurry slightly higher, or by slightly reducing the strength of air blowing that is performed after coating the base material part 10 with the catalyst slurry. The water pretreatment is performed by impregnating the base material with water and removing excess water by means of air blowing or the like. An exhaust gas purification filter 1 having a high collection rate, a low degree of pressure loss, and excellent purification performance for harmful gas components can thereby be obtained. The fine pore volume ratios of the filter pores $V_2 / V_1 \times 100$, $V_4 / V_3 \times 100$, etc. can also be adjusted by controlling the water pretreatment, the viscosity of the catalyst slurry, and the strength of the air blowing.

Reference signs used in the following embodiments, experimental examples, etc., that are the same as used in the above embodiments represent the same components, etc., as in the above embodiments, unless otherwise specified.

<Comparative embodiments>

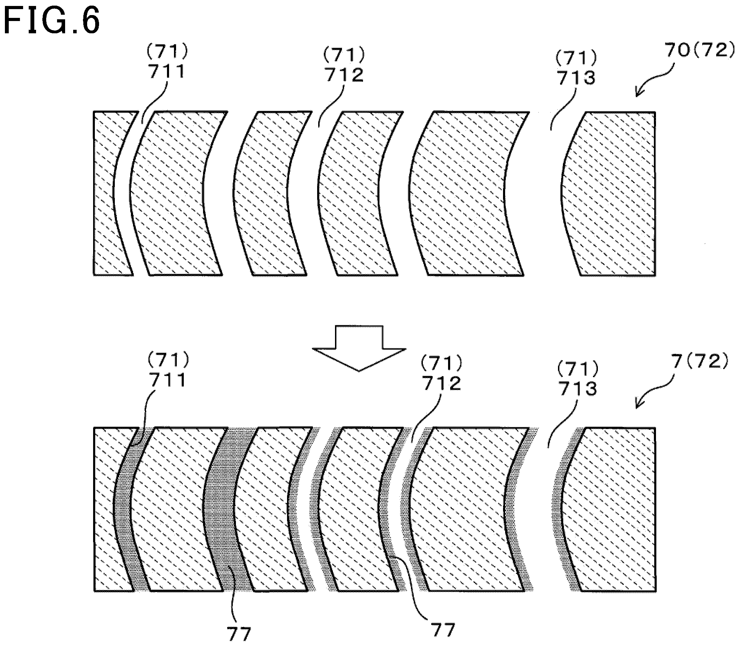

Exhaust gas purification filters according to respective comparative embodiments will be described with reference to Figs. 6 to 8. Exhaust gas purification filters according to first and second comparative embodiments, having different pore diameter distributions from that of the first embodiment will first be described.

(First comparative embodiment)

As illustrated in Fig. 6, first comparative embodiment relates to an example of a conventional exhaust gas purification filter 7, in which pore control is not performed. The upper diagram in Fig. 6, above the arrow, shows the base material part 70 of the honeycomb structure of the exhaust gas purification filter before the catalyst layer is formed, and the lower diagram shows the base material part 70 after the catalyst layer has been formed. Fig. 6 shows the shape of the pores 71 of the partition walls 72 in a simplified manner, as in Figs. 4 and 5 of the first embodiment.

As illustrated in Fig. 6, the partition walls 72 of the base material part 70 have a large number of pores 71 with various different pore diameters. In Fig. 6, the pores 71 are broadly classified into three types i.e., small-sized pores 711, medium-sized pores 712, and large-sized pores 713.

When the catalyst layer 77 is formed on the partition walls 72 of the base material part 70, some of the pores 71 such as the small pores 711 having a small pore diameter become blocked by the catalyst layer 77. It can be considered that this is due to the fact that the catalyst is coated in the same manner on each of the small to large size pores 711, 712, and 713 irrespective of the pore diameter, to form the catalyst layer 77. As a result, when the amount of catalyst required for purifying harmful gas components is deposited, the small-sized pores 711, which have a high collection efficiency for PM, are blocked. The collection rate of the exhaust gas purification filter 7 is thereby significantly reduced, and there is a significant increase in the pressure loss.

In addition, the exhaust gas produce from a gasoline engine generally has a smaller particle size of PM than the exhaust gas of a diesel engine. PM having a small particle size slips through coarse pores which have a diameter outside the range specified above. Hence, there is a decrease in the collection rate of PM from the exhaust gas of a gasoline engine.

(Second comparative embodiment)

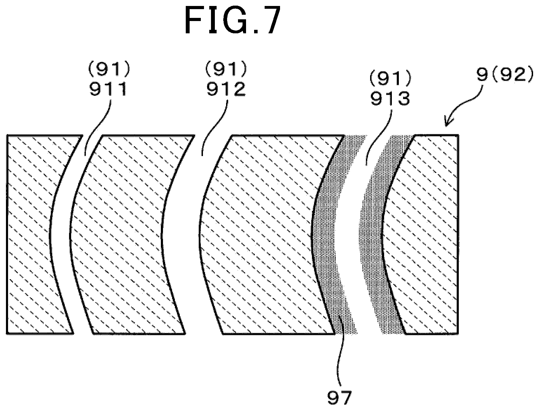

A second comparative embodiment relates to an exhaust gas purification filter 9 in which a catalyst layer 97 has been formed in the large-sized pores 913 as illustrated in Fig.7. A large number of small to large size pores 911, 912, and 913 are formed as pores 91 in the partition walls 92 of the exhaust gas purification filter 9.

In forming the catalyst layer 97 in the exhaust gas purification filter 9 of this example, firstly the pores 911 and 912, i.e., the pores other than those of large size in which the catalyst layer 97 is to be formed, are filled beforehand with a flammable substance. Next, the catalyst layer is formed in the large-sized pores 913 and the flammable substance is then burned off. In that way, the forming of the catalyst layer 97 is biased towards the large-sized pores 913.

As illustrated in Fig. 7, there are pores 911 and 912 in which the catalyst layer is not formed, in the partition walls 92 of the exhaust gas purification filter 9 of the second comparative embodiment. When the exhaust gas flows through the pores 911 and 912, PM is collected, however, since there is no catalyst layer, no purification is performed against harmful gas components such as CO, HC and NOx in the exhaust gas that passes through these pores. Thus, the purification performance against harmful gas components is lowered.

<Experimental Example 1>

In this example, values of collection rate and pressure loss are evaluated comparatively for a plurality of exhaust gas purification filters 1, having respectively different pore diameter distributions of the filter pores 121a. Firstly, based on the production method described in the first embodiment, exhaust gas purification filters 1 having respectively different pore diameter distributions (specifically, Examples 1 to 14 and Comparative Examples 1 to 12) were produced.

Each of the exhaust gas purification filters 1 are adjusted to have an average pore diameter of 10 to 20 $\mu$m and a porosity of 50 to 60%. The supported amount of the catalyst layer is 50 g / L. Measurement samples were taken from the partition walls 12 of the exhaust gas purification filters 1, and the porosity, the average pore diameter, and the pore diameter distribution were examined. The details are as follows.

(Measurement sample collection)

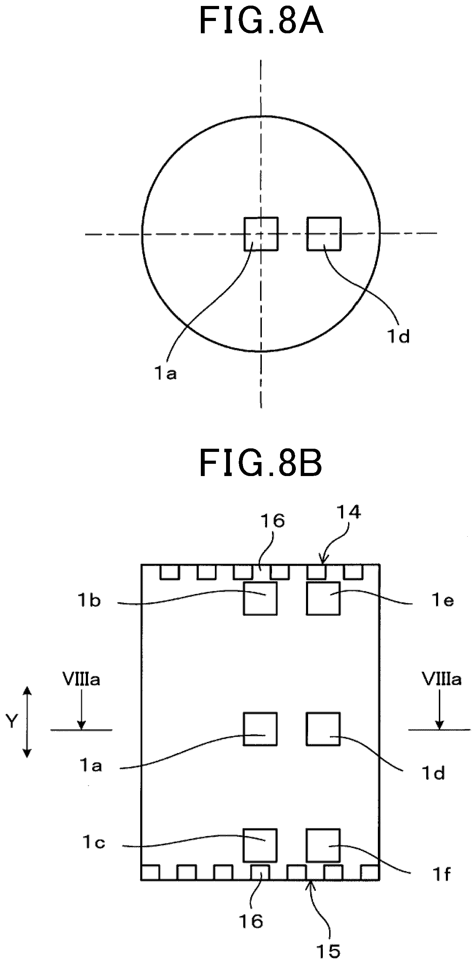

As shown in Figs. 8A and 8B, the measurement samples were collected from six locations, in a Y-direction axis that is along the central axis of the exhaust gas purification filter 1, a central portion 1a, an inner-side portion 1b located close behind the sealing parts 16 at the inflow end face 14 of the filter, and an inner-side portion 1c located close behind the sealing parts 16 at the outflow end face 15 of the filter, and, in a Y-direction axis that passes through the center of a radius of the exhaust gas purification filter 1, a central portion Id, an inner-side portion 1e located close behind the sealing parts 16 at the inflow end face 14 of the filter, and an inner-side portion If located close behind the sealing parts 16 at the outflow end face 15 of the filter. Each measurement sample is a substantially rectangular body having a length Y of 15 mm in the axial direction, a thickness of 15 mm in the wall thickness direction, and a length of 20 mm in a direction orthogonal to the axial direction and to the wall thickness direction. Measured values were obtained as follows for these 6 samples by a mercury porosimeter and the arithmetic mean value of the measured values was used as the measurement result.

(Porosity, average pore diameter)

The porosity and average pore diameter in the partition walls 12 of each exhaust gas purification filter 1 were measured by a mercury porosimeter using the principle of the mercury intrusion method. Samples taken from the partition walls 12 of the base material part 10 prior to applying the catalyst coating may be used in the case of the measurements performed for the base material part 10. The average pore diameter is also called average air pore diameter. An Autopore IV9500 manufactured by Shimadzu Corporation was used as the mercury porosimeter. The measurement conditions were as follows.

First, the measurement sample collected as described above was set in the measurement cell of the mercury porosimeter, and the interior of the measurement cell was depressurized. Mercury was then introduced into the measurement cell and the cell was pressurized. The pore diameter and the pore volume were measured based on the pressure at the time of pressurization and the volume of mercury introduced into the pores of the measurement sample.

The measurement was performed in a pressure range of 0.5 to 20000 psia. 0.5 psia corresponds to 0.35 $\times$ 10$^{-3}$ kg/mm$^2$, and 20000 psia corresponds to 14 kg/mm$^2$. The range of pore diameter values corresponding to this pressure range is 0.01 to 420 $\mu$m. A contact angle of 140° and a surface tension of 480 dyn / cm were used as constants when calculating the pore diameter from the pressure. The average pore diameter is the pore diameter at an integrated value of 50% of the pore volume. The porosity was calculated from the following relational expression:

$$\text{Porosity (\%) = total pore volume / (total pore volume + 1 / true specific density of}$$

cordierite) x 100

The true specific density of cordierite is 2.52.

(Pore volume ratio of large pores with a pore diameter of 50 $\mu$m or more, D50 of pore diameter distribution, (D50 - D10) / D50) of pore diameter distribution)

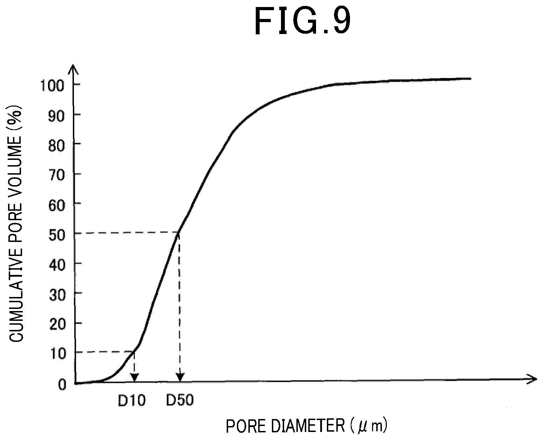

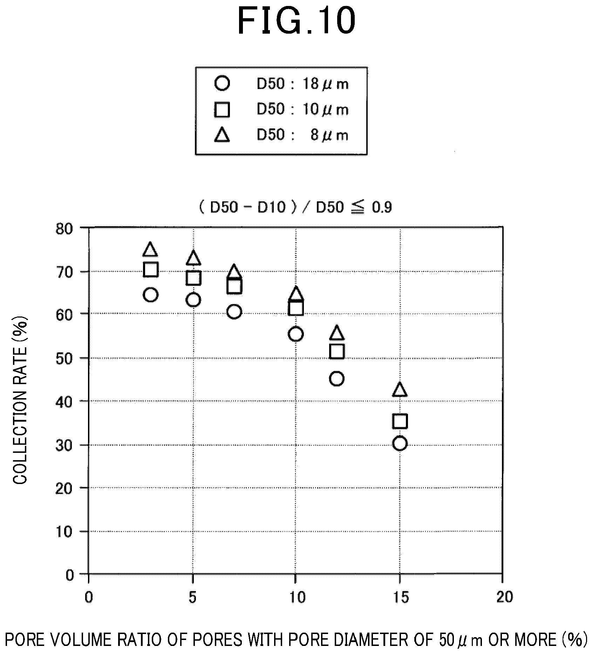

The pore diameter distribution of the measurement samples was examined using a mercury porosimeter, employing the principles of the mercury intrusion method. The measurement was carried out under the same conditions as for the measurement of porosity and average pore diameter described above. Examples of the pore diameter distributions are shown in Fig. 10. As shown in Fig. 9, D50 is the pore diameter at which the cumulative pore volume becomes 50%, and D10 is the pore diameter at which the cumulative pore volume becomes 10%. The pore volume ratio of pores having a pore diameter of 50 $\mu$m or more, that is, the pore volume ratio of the coarse pores, was determined based on the pore diameter distribution. The values of D50 and D50-D10 / D50 were also obtained. The results obtained for Examples 1 to 8 and Comparative Examples 1 to 10 are shown in Table 1, and the results obtained for Examples 9 to 14, Comparative Example 11 and Comparative Example 12 are shown in Table 2.

Next, the collection rate and pressure loss of the exhaust gas purification filter 1 were measured as follows. The results obtained for Examples 1 to 8 and for Comparative Examples 1 to 10 are shown in Table 1, and the results obtained for Examples 9 to 14 and for Comparative Examples 11 and 12 are shown in Table 2.

(Collection rate)

The exhaust gas purification filter 1 was installed in the exhaust pipe of a 2.0 L gasoline direct injection engine, and the intake air rate (Ga) was set to 20 g / s (steady state). Exhaust gas containing PM was then caused to flow into the exhaust gas purification filter 1. At this time, the respective values of PM concentration in the exhaust gas before flowing into and after flowing out from the exhaust gas purification filter 1 were measured, and the PM collection rate was calculated. Fig. 10 shows the relationship between the pore volume ratio of pores having a pore diameter of 50 $\mu$m or more and the collection rate of the exhaust gas purification filter 1.

(Pressure loss)

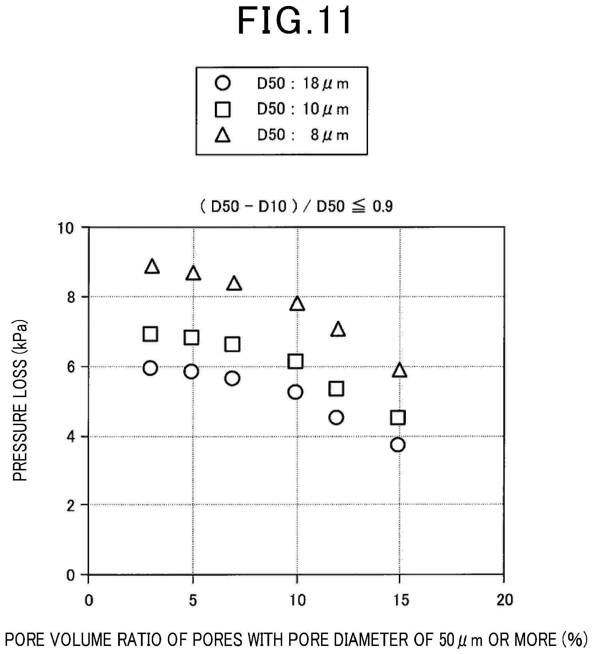

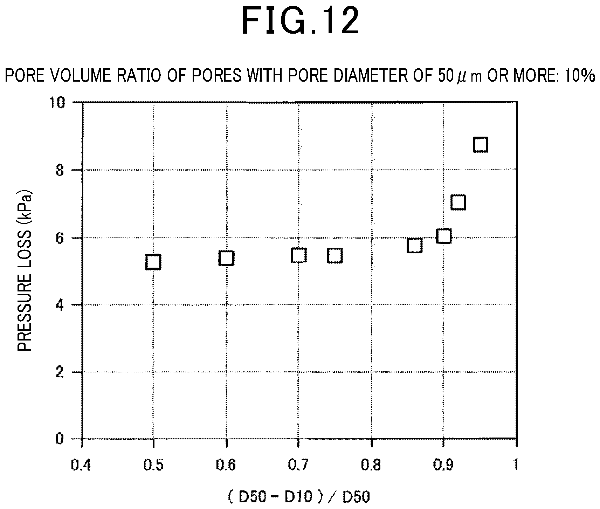

The exhaust gas purification filter 1 was installed in the exhaust pipe of a 2.0 L gasoline direct injection engine, and the intake air amount (Ga) was set to 100 g / s (steady state). Exhaust gas containing PM was then caused to flow into the exhaust gas purification filter 1. At this time, the pressure values of the exhaust gas before and after passing through the exhaust gas purification filter 1 were respectively measured, and the difference was calculated as the degree of pressure loss of the filter. Fig. 11 shows the relationship between the pressure loss in the exhaust gas purification filter 1 and the pore volume ratio of pores having a pore diameter of 50 $\mu$m or more. Fig. 12 shows the relationship between (D50 - D10) / D50 of the pore diameter distribution and the pressure loss of the exhaust gas purification filter 1.

[Table 1]

| Number of example or comparative example | Pore volume ratio of pores having diameter of 50 $\mu$m or more (%) | D50 ($\mu$m) | (D50-D10)/ D50 | Collection rate (%) | Pressure loss (kPa) |
|---|---|---|---|---|---|
| Comparative example 1 | 3 | 8 | 0.72 | 75 | 8.9 |
| Comparative example 2 | 5 | 8 | 0.75 | 73 | 8.7 |
| Comparative example 3 | 7 | 8 | 0.78 | 70 | 8.4 |
| Comparative example 4 | 10 | 8 | 0.85 | 65 | 7.8 |
| Comparative example 5 | 12 | 8 | 0.86 | 56 | 7.1 |
| Comparative example 6 | 15 | 8 | 0.89 | 43 | 5.9 |
| Example 1 | 3 | 10 | 0.77 | 70 | 6.9 |
| Example 2 | 5 | 10 | 0.81 | 68 | 6.8 |

(continued)

| Number of example or comparative example | Pore volume ratio of pores having diameter of 50 μm or more (%) | D50 (μm) | (D50-D10)/ D50 | Collection rate (%) | Pressure loss (kPa) |
|---|---|---|---|---|---|
| Example 3 | 7 | 10 | 0.83 | 66 | 6.6 |
| Example 4 | 10 | 10 | 0.87 | 61 | 6.1 |
| Comparative example 7 | 12 | 10 | 0.88 | 51 | 5.3 |
| Comparative example 8 | 15 | 10 | 0.90 | 35 | 4.5 |
| Example 5 | 3 | 18 | 0.83 | 64 | 5.9 |
| Example 6 | 5 | 18 | 0.85 | 63 | 5.8 |
| Example 7 | 7 | 18 | 0.86 | 60 | 5.6 |
| Example 8 | 10 | 18 | 0.88 | 55 | 5.2 |
| Comparative example 9 | 12 | 18 | 0.89 | 45 | 4.5 |
| Comparative example 10 | 15 | 18 | 0.90 | 30 | 3.7 |

[Table 2]

| Number of example or comparative example | Pore volume ratio of pores having diameter of 50 μm or more (%) | D50 (μm) | (D50 - D10) / D50 | Pressure loss (kPa) |
|---|---|---|---|---|
| Example 9 | 10 | 10 | 0.50 | 5.3 |
| Example 10 | 10 | 10 | 0.60 | 5.4 |
| Example 11 | 10 | 10 | 0.70 | 5.5 |
| Example 12 | 10 | 10 | 0.75 | 5.5 |
| Example 13 | 10 | 10 | 0.86 | 5.8 |
| Example 14 | 10 | 10 | 0.90 | 6.1 |
| Comparative example 11 | 10 | 10 | 0.92 | 7.1 |
| Comparative example 12 | 10 | 10 | 0.95 | 8.8 |

As can be seen from Table 1 and Fig. 10, when the volume ratio of large pores having a pore diameter of 50 μm or more exceeds 10%, the collection rate decreases sharply. By setting the volume ratio of the large pores to 10% or less, the collection rate can be maintained at a high level.

Furthermore, as can be seen from Table 1 and Fig. 11, the volume ratio of 10% for the large pores is a borderline value at which there is a change in the variation of the pressure drop values, even for different pore diameter distributions. That is, when the volume ratio of the large pores becomes less than 10%, there are only small changes in the values of pressure loss, whereas when the volume ratio becomes greater than 10%, the values of pressure loss drop sharply. Furthermore, when D50 becomes smaller than 10 μm, the pressure loss increases sharply.

As can be seen from Table 2 and Fig. 12, when (D50 - D10)/D50 exceeds 0.9, the pressure loss rises sharply. By setting (D50 - D10) / D50 to 0.9 or less, an increase in pressure loss can be prevented and the pressure loss can be held at a low level.

It can thus be understood that, from the results shown in Figs. 10 to 12, the volume ratio of pores having a pore diameter of 50 μm or more should be 10% or less, and (D50 - D10) / D50 should be 0.9 or less, from the aspect of achieving both a high collection rate and also a low degree of pressure loss. In that case, with the filter in a condition where the catalyst layer has been sufficiently formed as described above, both a high collection rate and a low pressure loss can be achieved at the same time, so that a sufficient level of performance in collecting PM and a sufficiently low degree of pressure loss can be realized while ensuring an excellent capability for purification of harmful gases.

From the aspect of achieving both a high collection rate and a low degree of pressure loss, the collection rate is preferably 55% or more, and the pressure loss is preferably 7 kPa or less. If the exhaust gas purification filter 1 has a large pore volume ratio of 10% or less and (D50 - D10) / D50 of 0.9 or less in the pore diameter distribution, then the collection rate can be as high as 55% or more while maintaining the pressure loss to 7 kPa or less.

Furthermore, the partition walls 12 preferably contain 5 to 15% of fine pores having a pore diameter of 0.1 to 5 $\mu$m. That is, it is preferable that the pore volume ratio of pores having a pore diameter in the range 0.1 to 5 $\mu$m is in the range 5 to 15%. In that case, a lower degree of pressure loss can be made compatible with a higher collection rate. The reason for this is as follows. If for example the pore volume ratio of pores having a pore diameter of 5 $\mu$m or less is 10%, i.e., D10 is 5 $\mu$m, and D50 is made 10 $\mu$m, then (D50 - D10) / D50 will be 0.5, and hence the pressure loss will become low as described above. If the pore volume ratio of pores having a pore diameter in the range 0.1 to 5 $\mu$m is in the range 5 to 15%, then (D50 - D10) / D50 will be within a range of small values, and hence the pressure loss can be held at a low level, as shown by Fig. 12. The pore volume ratio of pores having a pore diameter of 0.1 to 5 $\mu$m can be calculated from the pore diameter distribution measured using a mercury porosimeter, in the same manner as described above for the pore volume ratio of pores having a pore diameter of 50 $\mu$m or more.

<Experimental example 2>

In this example, a preferable form of the relationship between the pore diameter distribution of the base material part 10 and the pore diameter distribution of the exhaust gas purification filter 1 will be examined from the aspects of collection rate, pressure loss, and purification performance against harmful gas components. The pore diameter distribution of the base material part 10 is determined by measuring the pore diameter distribution in the base material part 10 before forming the catalyst layer, that is, before coating with the catalyst layer. The pore diameter distribution of the exhaust gas purification filter 1 is determined by measuring the pore diameter distribution of the filter after the catalyst layer has been formed, that is, after coating with the catalyst layer. The pore diameter distribution is measured in the same manner as in Experimental Example 1. The volume ratio of the coarse pores in the partition walls 12 of the base material part 10 having a pore diameter of 50 $\mu$m or more, the volume $V_1$ of the coarse pores in the partition walls 12 of the base material part 10 having a pore diameter of 50 $\mu$m or more and the volume $V_3$ of the fine pores in the partition walls 12 of the base material part 10 having a pore diameter in the range 0.1 $\mu$m to 5 $\mu$m, and the volume $V_2$ of the coarse pores having a pore diameter of 50 $\mu$m or more and the volume $V_4$ of the fine pores having a pore diameter in the range 0.1 $\mu$m to 5 $\mu$m in the partition walls 12 of the exhaust gas purification filter 1 were calculated based on this pore diameter distribution. Tables 3 and 4 show the relationship between these values and the collection rate, the pressure loss, and the temperature T50 at which the THC concentration reaches 50% after performing durability testing. THC is a general term for hydrocarbon gases. The temperature T50 at which the concentration of THC reaches 50% after the durability testing was measured as follows.

(THC T50)

A test piece having a diameter $\Phi$ of 30 mm and length L of 50 mm was cut out from a catalyst-coated exhaust gas purification filter 1 and subjected to thermal durability testing at 950 °C. for 100 hours in atmospheric air. Using a model gas bench, T50 was measured when the temperature of the test piece was raised at a heating rate of 50° C / min, after performing thermal durability testing. The gas composition of the model gas bench was 2700 ppmc of $C_3H_6$, 2700 ppm of NO, 0.18% of CO, 14.8% of $C_2$, 0.5% of $O_2$, and 0.49 ml / min of $H_2O$, with SV adjusted to be 41000 / h. SV signifies spatial velocity.

[Table 3]

| Volume ratio of large pores in base material part | $V_2/V_1 \times 100$ (%) | Collection rate (%) | Pressure loss (kPa) |
|---|---|---|---|
| 2 | 70 | 70 | 7.0 |
| 3 | 70 | 65 | 6.1 |
| 7 | 74 | 57 | 5.6 |
| 7 | 70 | 62 | 5.9 |
| 7 | 51 | 67 | 6.0 |
| 15 | 66 | 60 | 5.7 |
| 18 | 55 | 56 | 5.6 |

[Table 4]

| Volume ratio of large pores in base material part | V₂/V₁ × 100 (%) | V₄/V₃ × 100 (%) | THC T50 (°C) 950 °C ×100 hours of withstanding testing |
|---|---|---|---|
| 7 | 70 | 130 | 283 |
| 7 | 70 | 200 | 273 |
| 7 | 70 | 320 | 268 |

As shown by Table 3 the collection rate can be further increased, and the pressure loss further decreased, by setting the volume ratio of the large pores in the partition walls 12 of the base material itself to a value in the range 3 to 15% and setting $V_2 / V_1 \times 100$ to 70% or less.

As shown by Table 4, when $V_4 / V_3 \times 100$ is less than 200%, the purification performance against THC deteriorates sharply. From the aspect of further improving the purification performance, $V_4 / V_3 \times 100$ is preferably made 200% or more.

The present disclosure is not limited to the above embodiments, and can be applied to various embodiments without departing from the gist thereof. The exhaust gas purification filter 1 is more suitable for purifying the exhaust gas discharged from a gasoline engine, but may also be used for purifying the exhaust gas discharged from a diesel engine.

Although the present disclosure has been described in accordance with embodiments, it is to be understood that the disclosure is not limited to the described embodiments or structures. The present disclosure also includes various modifications and modifications that come within a range of equivalents. In addition, various combinations and forms, as well as other combinations and forms that include only one element more, or less, are also within the scope of the present disclosure.

**Claims**

1.   An exhaust gas purification filter (1) comprising:

   a base material part (10) having a honeycomb-structure, the base material part comprising porous partition walls (12) and a plurality of cells (13) which are partitioned by the partition walls and form an exhaust gas flow path, a catalyst layer (17) supported on pore walls (124) in the partition walls of the base material part, and sealing parts (16) which seal the ends of the cells alternately at an exhaust gas inflow end face (14) or at an outflow end face (15):
   wherein:

   the partition walls supporting the catalyst layer contain 10% or less of pores having a pore diameter of 50 μm or more, and
   in the pore distribution in the partition walls supporting the catalyst layer, the pore diameter D50 at which the cumulative pore volume becomes 50% is 10 μm or more, and the pore diameter D50 and the pore diameter D10 at which the cumulative pore volume becomes 10% satisfy the relationship of Expression I below.

$$\text{(D50 - D10) / D50} \leq 0.9 \text{ ... Expression I}$$

2.   The exhaust gas purification filter according to claim 1, comprising 5 to 15% of pores having a pore diameter of 0.1 μm to 5 μm.

3.   The exhaust gas purification filter according to claim 1 or claim 2, wherein content of pores having a pore diameter of 50 μm or more in the partition walls in the base material part is 3 to 15%.

4.   The exhaust gas purification filter according to any of claims 1 to 3 wherein the pore volume $V_1$ of pores in the base material part having a pore diameter of 50 μm or more and the pore volume $V_2$ of pores in the exhaust gas purification filter having a pore diameter of 50 μm or more satisfy the relationship of Expression 2 below.

$$V_2 / V_1 \text{ x } 100 \leq 70\% \text{ ... Expression 2}$$

5. The exhaust gas purification filter according to any of claims 1 to 4 wherein the pore volume $V_3$ of pores in the base material part having a pore diameter of 0.1 $\mu$m to 5 $\mu$m and the pore volume $V_4$ of pores in the exhaust gas purification filter having a pore diameter of 0.1 $\mu$m to 5 $\mu$m or more satisfy the relationship of Expression 3 below.

$$V_4 / V_3 \text{ x } 100 \geq 200\% \text{ ... Expression 3}$$

# FIG.1

# FIG.2

# FIG.3

# FIG.4

# FIG.5

(121)
121b

12(10)

121b
(121)

124

16

# FIG.6

EP 3 960 271 A1

# FIG.7

# FIG.8A

1d

1a

# FIG.8B

16    14

1b

1e

VIIIa    VIIIa

Y

1a    1d

1c

1f

16

15

# FIG.9

# FIG.10

PORE VOLUME RATIO OF PORES WITH PORE DIAMETER OF 50 $\mu$ m OR MORE (%)

# FIG.11

○  D50 : 18 μm
□  D50 : 10 μm
△  D50 :  8 μm

$(D50 - D10) / D50 \leqq 0.9$

PORE VOLUME RATIO OF PORES WITH PORE DIAMETER OF 50 μm OR MORE (%)

PRESSURE LOSS (kPa)

# FIG.12

PORE VOLUME RATIO OF PORES WITH PORE DIAMETER OF 50 $\mu$ m OR MORE: 10%

**EP 3 960 271 A1**

## INTERNATIONAL SEARCH REPORT

International application No.

PCT/JP2020/011407

### A. CLASSIFICATION OF SUBJECT MATTER

Int.Cl. B01D39/14(2006.01)i, B01D46/00(2006.01)i, B01J35/04(2006.01)i,
B01D53/86(2006.01)i, B01D53/94(2006.01)i, F01N3/022(2006.01)i,
F01N3/035(2006.01)i, F01N3/28(2006.01)i
FI: B01J35/04301C, B01J35/04301E, F01N3/035A, F01N3/28301P, B01D39/14B,
B01D46/00302, B01D53/86241, B01D53/94241, B01D53/86222, B01D53/86245,
B01D53/86280, B01D53/94222, B01D53/94245, B01D53/94280, F01N3/022CZAB

According to International Patent Classification (IPC) or to both national classification and IPC

### B. FIELDS SEARCHED

Minimum documentation searched (classification system followed by classification symbols)
Int.Cl. B01D39/14, B01D46/00, B01J35/04, B01D53/86, B01D53/94, F01N3/022,
F01N3/035, F01N3/28

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 5897242 B2 (CORNING INCORPORATED) 30.03.2016 (2016-03-30), claims, paragraphs [0015]-[0077], drawings | 1-5 |
| Y | JP 2003-120256 A (DENSO CORPORATION) 23.04.2003 (2003-04-23), claims, paragraphs [0013], [0018], [0019], embodiments | 1-5 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13.05.2020 | 02.06.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

24

INTERNATIONAL SEARCH REPORT
Information on patent family members

International application No.

PCT/JP2020/011407

| | | |
|---|---|---|
| JP 5897242 B2 | 30.03.2016 | US 2008/0110143 A1 |
| | | drawings, paragraphs [0024]-[0083], claims |
| | | WO 2008/060504 A2 |
| | | EP 2086910 A |
| | | CN 101558024 A |
| | | |
| JP 2003-120256 A | 23.04.2003 | US 2003/0024220 A1 |
| | | paragraphs [0024], [0040]-[0042], embodiments, claims |
| | | DE 10235806 A |
| | | FR 2828115 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019086487 A
- JP 3855267 B